# EUROPÄISCHE PATENTANMELDUNG

(11) **EP 2 567 822 A2**
(43) Veröffentlichungstag der Anmeldung: **13.03.2013**
(21) Anmeldenummer: 12174074.0
(22) Anmeldetag: 28.06.2012
(51) Int. Cl.: B41J 3/407

(54) **Behälter mit bedruckter Oberflächenkontur und Druckverfahren**

(30) Priorität: 01.09.2011 DE 102011082011
(71) Anmelder: Krones AG, 93073 Neutraubling (DE)
(72) Erfinder: Senn, Konrad, 93059 Regensburg (DE); Kraus, Andreas, 93049 Regensburg (DE); Schau, Alexander, 93073 Neutraubling (DE); Sonnauer, Andreas, 93086 Wörth (DE)
(74) Vertreter: Grünecker, Kinkeldey, Stockmair & Schwanhäusser

(57) **Zusammenfassung**

Beschrieben werden ein bedruckter Behälter zur Verpackung, insbesondere Verkaufsverpackung von Produkten, insbesondere Getränken, sowie ein entsprechendes Druckverfahren. Der Behälter (1,11) umfasst wenigstens einen seitlichen Wandabschnitt (3a, 3b, 13a, 13b) in dem eine reliefartige Oberflächenkontur (5a-5d, 15a-15d) zur Verzierung und/oder Markierung ausgebildet ist. Dadurch, dass die reliefartige Oberflächenkontur selektiv bedruckt ist, lässt sich im Zusammenwirken der Reliefkontur mit dem Aufdruck (7a-7d, 17a-17c)ein optischer Eindruck des Behälters verbessern und/oder ein synergetischer Effekt mit der Haptik der Oberflächenkontur erzielen.

## Beschreibung

Die Erfindung betrifft einen Behälter zur Verpackung von Produkten nach dem Oberbegriff des Anspruchs 1 sowie ein Verfahren zum Bedrucken des erfindungsgemäßen Behälters.

Es ist bekannt, Verpackungsbehälter für Produkte, wie beispielweise Getränke, Hygieneartikel und dergleichen, zugunsten einer hochwertigen Produktpräsentation und/oder einer verbesserten Handhabung im seitlichen Wandbereich mit reliefartigen Oberflächenkonturen zu versehen. Dies kann insbesondere bei Kunststoffbehälter zur Versteifung der Behälterwand sowie zu einer Aufwertung des Erscheinungsbilds und der Haptik des Behälters beitragen. In der Regel lässt sich somit durch eine reliefartige Oberflächenstruktur, beispielsweise eine ornamentale Struktur, ein Mehrwert des Behälters erzielen.

Ferner werden Behälter bekanntermaßen zum Zwecke der Etikettierung und/oder Verzierung bedruckt, beispielsweise mit Schriftzeichen, Logos, Mustern und Farbverläufen. Hierzu beschreibt beispielsweise die WO 03/002349 A2 ein Verfahren zum Tintenstrahldruck auf im Wesentlichen zylindrische Behälterseitenwände. Ebenso ist es aus der DE 197 53 816 C2 bekannt, durch einen Aufdruck auf einer ebenen Behälteroberfläche den Eindruck eines natürlichen Malachitsteins oder ähnlicher Werkstoffe zu imitieren. Aus der DE 2 404 433 A1 ist ferner ein Druckverfahren bekannt, bei dem die Seitenwand eines Kunststoffbehälters bereits in der Herstellungsform mittels seitlicher Düsen bedruckt wird. Dies schränkt die Gestaltungsfreiheit und Druckqualität jedoch unerwünscht ein.

Für all diese Druckverfahren ist lediglich der Aufdruck auf glattflächige Bereiche der Behälterseitenwand beschrieben.

Es wäre jedoch wünschenswert, den Mehrwert von Produktverpackungen, insbesondere solchen aus Kunststoff, gegenüber dem bekannten Verfahren weiter zu steigern. Besonders vorteilhaft wäre hierbei eine Wertsteigerung bei minimiertem Materialeinsatz und größtmöglicher Gestaltungsfreiheit bezüglich der Behälterformen und Aufdrucke.

Die gestellte Aufgabe wird mit einem Behälter zur Verpackung, insbesondere zur Verkaufsverpackung, von Produkten, insbesondere Getränken, gemäß Anspruch 1 gelöst. Dadurch, dass eine reliefartige Oberflächenkontur zur Verzierung und/oder Markierung in einem seitlichen Wandabschnitt selektiv bedruckt ist, und/oder der seitliche Wandabschnitt um die reliefartige Oberflächenkontur herum, kann ein optisch vorteilhafter Eindruck, der ansonsten auf Kontraste durch Schattenbildung und/oder Lichtreflexionen beschränkt ist, durch den Aufdruck gezielt verbessert werden. Gleichzeitig kann die Behälterwand für eine vorgegebene mechanische Belastbarkeit versteift werden. Ebenso lässt sich durch einen selektiven Aufdruck auf der reliefartigen Oberflächenkontur ein haptischer Sinneseindruck verstärken. Es lässt sich somit die Wertigkeit des Behälters durch ein Zusammenwirken der durch die reliefartige Oberflächenstruktur vorgegebenen Haptik und einer selektiven Bedruckung gezielt verstärken. Eine verzierende Kontur ist beispielsweise eine ornamentale Struktur, eine Kontur zur Markierung ist beispielsweise eine Schrift oder eine Füllstandsmarke. Der Aufdruck kann derart ausgebildet sein, dass er einen Glanzgrad des bedruckten Bereichs selektiv verändert, beispielsweise von matt in glänzend oder umgekehrt, und/oder dass er die Oberflächenstruktur gezielt verändert, beispielsweise die Rauhigkeit. Damit lassen sich sowohl verzierende Effekte erzielen als auch Markierungen herstellen. Dies ist beispielsweise bei Behältern für Getränke, Kosmetikartikel, Reinigungsmittel und dergleichen besonders vorteilhaft.

Unter einer reliefartigen Oberflächenkontur ist eine dreidimensionale Struktur zu verstehen, die sich gegenüber einem umgebenden Wandabschnitt durch gezielt und/oder reproduzierbar herstellbare Erhebungen und/oder Vertiefungen abzeichnet. Derartige reliefartige Oberflächenkonturen umfassen vorzugsweise Konturen im makroskopischen Bereich, die sich sowohl fühlen lassen als auch bei den für den Gebrauch oder den Verkauf der Behälter üblichen Betrachtungsabständen vom menschlichen Auge erkannt, also räumlich aufgelöst, werden können.

Ein Aufdruck um die reliefartige Oberflächenkontur herum ist besonders wirkungsvoll bei erhabenen Oberflächenkonturen, wie beispielsweise Schriftzügen, um diese farblich gegenüber dem bedruckten Wandabschnitt abzugrenzen und somit hervorzuheben. Die reliefartige Oberflächenkontur könnte zusätzlich selbst bedruckt werden. Besonders vorteilhaft ist aber eine Variante, bei der der Werkstoff des zugehörigen Wandabschnitts bereits geeignet eingefärbt ist, so dass nur um die reliefartige Oberflächenkontur herum gedruckt werden muss. Möglich wäre auch ein Aufdruck um eine transparente reliefartige Oberflächenkontur herum. Der Aufdruck könnte dann beim Verkauf vorteilhaft mit der Farbe des Füllguts zusammenwirken und beim späteren Gebrauch als Füllstandsmarke oder dergleichen dienen. Es ist auch denkbar, nur Teilabschnitte des an die Oberflächenkontur angrenzenden Wandabschnitts zu bedrucken, beispielsweise nur Bereiche unterhalb eines Schriftzugs, um einen schattenähnlichen Effekt zu erzielen, oder oberhalb eines Schriftzugs, um eine Beleuchtungssituation zu imitieren. Es können Bereiche innerhalb und/oder außerhalb der reliefartigen Oberflächenkontur erfindungsgemäß bedruckt werden. Derartige Aufdrucke lassen sich auch um erhabene Strukturen herum mittels Tintenstrahldruck besonders wirkungsvoll umsetzen.

Vorzugsweise ist ein Aufdruck mit einem dem Verlauf der reliefartigen Oberflächenkontur folgenden Helligkeitskontrast und/oder Farbkontrast vorgesehen. Dadurch lässt sich ein durch den Verlauf der Oberflächenkontur vorgegebener oder angedeuteter Helligkeitsverlauf, Schattenwurf oder eine Lichtreflexion gezielt in ihrer Wirkung verstärken. Insbesondere lässt sich ein plastischer Eindruck, der durch den Verlauf der Oberflächenkontur vorgegeben ist, optisch verstärken. Alternativ oder ergänzend könnten auch dem Verlauf der reliefartigen Oberflächenkontur folgende Grenzen, Abstufungen oder Übergänge von Bereichen mit unterschiedlicher Oberflächenrauhigkeit, unterschiedlichem Glanzgrad und/oder Reibungskoeffizienten vorgesehen sein.

Bei einer besonders günstigen Ausführungsform des erfindungsgemäßen Behälters weist die reliefartige Oberflächenkontur wenigstens eine Erhebung und/oder Vertiefung auf, die in einer zweidimensionalen Projektion des seitlichen Wandabschnitts, insbesondere in einer Zylinderprojektion um die Hochachse des Behälters, gekrümmt und/oder schräg verläuft. Derartige Oberflächenkonturen heben sich gegenüber der geometrischen Grundform des Behälters besonders effektvoll ab. Es lässt sich dadurch eine besonders hohe Wertsteigerung durch die Kontur und durch das selektive Bedrucken des zugehörigen seitlichen Wandabschnitts erzielen.

Die zweidimensionale Projektion entspricht hier näherungsweise der Abwicklung auf einer bedruckbaren ebenen Fläche. Für die meisten gängigen Behältergrundformen eignet eine Zylinderprojektion, wie sie beispielsweise von geographischen Kartennetzentwürfen als flächentreue Zylinderprojektion, winkeltreue Zylinderprojektion oder als mittabstandstreue Zylinderprojektion bekannt ist. In diesen Projektionen verläuft vorzugsweise zumindest ein Abschnitt der reliefartigen Oberflächenstruktur schräg und/oder gekrümmt. Es sind grundsätzlich jedoch auch andere Projektionsverfahren zum Bedrucken der Oberflächenkontur denkbar.

Die erfindungsgemäße Projektion ist jedoch insbesondere nicht auf zylindrische Behälterformen beschränkt. Es können beispielsweise auch Formflaschen mit nichtrotationssymmetrischem Querschnitt als zweidimensionale Projektion dargestellt werden.

Die zweidimensionale Projektion definiert Druckbereiche auf und/oder im Bereich der reliefartigen Oberflächenkontur und bildet die Grundlage für Druckanweisungen zum Bedrucken der Behälterseitenwand.

Vorzugsweise ist die reliefartige Oberflächenkontur ferner zur Versteifung des Behälters, insbesondere zur radialen und/oder axialen Versteifung, ausgebildet. Dadurch lassen sich gleichzeitig eine optische und haptische Aufwertung des Behälters sowie eine Verbesserung der mechanischen Widerstandsfähigkeit erzielen. Unter einer radialen Versteifung ist hierbei eine Versteifung zu verstehen, die insbesondere seitlich in Richtung der Hochachse des Behälters einwirkenden Kräften entgegen wirkt, beispielsweise beim Greifen des Behälters. Axiale Versteifungen können beispielsweise die Widerstandskraft des Behälters gegenüber Stapellasten verbessern.

Vorzugsweise besteht der Behälter aus Kunststoff, insbesondere aus PET oder HDPE. Bei diesen Behältermaterialien wirkt sich eine optische und haptische Aufwertung mittels bedruckter reliefartiger Oberflächenkonturen besonders vorteilhaft aus. Insbesondere kann ein gegenüber Glasflaschen gegebenenfalls als nachteilig empfundener optischer und haptischer Eindruck verbessert werden. Ein erfindungsgemäßes Bedrucken von Glasflaschen mit reliefartigen Oberflächenstrukturen ist jedoch ebenso denkbar.

Vorzugsweise ist der Behälter im Streckblasverfahren hergestellt. Bei derartigen Behältern lassen sich reliefartige Oberflächenkonturen auf besonders vielfältige und besonders einfache Weise herstellen. Ebenso können die Behälter durch Einsatz entsprechender Vorformlinge aus einem für den Aufdruck besonders gut geeigneten Material hergestellt werden, beispielsweise in einer für den Hintergrund des Aufdrucks besonders geeigneten Farbe. Es lassen sich durch einfaches Austauschen der Vorformlinge opake oder durchsichtige Behälter bereitstellen. Somit lässt sich eine Synergie von Erscheinungsbild und Haptik des Behälters mit geblasenen Behältern besonders gut erzielen. Einzelne bedruckte oder unbedruckte Wandabschnitte können sich zusätzlich bezüglich ihrer Oberflächenrauhigkeit unterscheiden, um beispielsweise glänzende und matte Wandbereiche oder klare und Licht streuende Wandbereiche zu realisieren. Grundsätzlich lässt sich die Erfindung auch an mittels Spritzblasen oder Extrusionsblasen hergestellten Behältern vorteilhaft anwenden.

Vorzugsweise ist der Behälter hierbei aus einem Vorformling, umfassend wenigstens zwei unterschiedlich eingefärbte Wandabschnitte hergestellt. Es lässt sich somit bereits durch das Blasen des Behälters eine mehrfarbige Behälterwand bereitstellen. Somit kann die Farbe eines geeignet gefärbten Wandabschnitts als Hintergrund für den erfindungsgemäßen Aufdruck dienen. Dies vereinfacht das anschließende Bedrucken der seitlichen Wandabschnitte und kann ferner die Druckqualität oder das Erscheinungsbild des Drucks verbessern. Ein zusätzliches Unterdrucken mit einer Hintergrundfarbe wird dadurch entbehrlich. Unter unterschiedlich eingefärbt ist hier auch ein Konfiguration zu verstehen, bei der sich die Wandabschnitte nur oder zusätzlich bezüglich der Lichtdurchlässigkeit unterscheiden, beispielsweise ein transparenter und ein opaker Wandabschnitt. Der erfindungsgemäße Aufdruck verbessert jedoch generell auch aus einfarbigen oder durchgehend transparenten Vorformlingen hergestellte Behälter.

Vorzugsweise setzt sich ein Druckbild im Farbton eines der unterschiedlich eingefärbten Wandabschnitte übergangslos in wenigstens dem zweiten Wandabschnitt fort. Dadurch lässt sich ein homogenes Erscheinungsbild auch bei komplizierten reliefartigen Oberflächenstrukturen mit vergleichsweise geringem Aufwand für das Bedrucken erzielen. Anders gesagt, nimmt das Druckbild den Farbton und die Form bzw. den Umriss eines benachbarten, geeignet eingefärbten Wandabschnitts auf, um gemeinsam mit diesem eine Verzierung, Markierung oder dergleichen auszubilden.

Bei Behältern mit wenigstens zwei Wandabschnitten, die aus Grundmaterialien bzw. Werkstoffen mit unterschiedlichen optischen Eigenschaften bestehen, beispielsweise mit unterschiedlicher Farbgebung, Transparenz, Lichtstreuung und dergleichen, können besonders vorteilhafte Effekte durch einen nahtlos an einen benachbarten Wandabschnitt anschließenden Aufdruck auch für den Fall erzielt werden, dass der Behälter keine reliefartigen Oberflächenstrukturen aufweist oder der erfindungsgemäße Aufdruck nicht in Bereichen mit reliefartigen Oberflächenstrukturen vorgesehen ist. Somit lässt sich eine Wertsteigerung des Behälters auch durch Bedrucken regelmäßiger und/oder glatter Oberflächen erzielen, beispielsweise von im Wesentlichen glattflächigen zylindrischen Seitenwandbereichen.

Dazu wird vorzugsweise ein Farbton eines ersten Wandbereichs übergangslos durch den Aufdruck auf einem zweiten Wandbereich, der aus einem Werkstoff eines anderen Farbtons hergestellt ist, fortgesetzt. In dem zweiten Wandbereich kann der Farbton des Aufdrucks, ausgehend vom Farbton des ersten Wandbereichs und in geeignetem Abstand von diesem, dann beliebig variieren, beispielsweise als gradueller oder fließender Übergang in den Farbton des Werkstoffs des zweiten Wandbereichs. Dadurch lassen sich erhabene oder vertiefte dreidimensionale Strukturen besonders wirkungsvoll und mit geringem Aufwand zweidimensional nachahmen, beispielsweise ein Schattenwurf oder dergleichen.

Durch den nahtlosen Übergang des Aufdrucks zu einem entsprechend eingefärbten Grundmaterial eines benachbarten Wandabschnitts lässt sich die insgesamt zu bedruckende Fläche minimieren, ohne dadurch einen nachteiligen optischen Eindruck im Übergangsbereich zwischen dem Aufdruck und dem angrenzenden Wandbereich mit entsprechender Farbgebung in Kauf nehmen zu müssen. Durch einen nahtlos angrenzenden Aufdruck könnte auch eine Lichtbrechung und/oder Lichtstreuung eines benachbarten Wandbereichs nachgeahmt werden, beispielsweise ein gefrosteter, also diffus streuender Wandbereich. Somit lässt sich durch einen bei üblichen Betrachtungsabständen optisch nahtlosen Übergang des Aufdrucks zum angrenzenden Wandbereich gerade auch in Bereichen ohne reliefartige Strukturen im Sinne der vorstehenden Definition eine eigenständige technische Aufgabe lösen. Nichtsdestotrotz ist ein derartiger Aufdruck in Bereichen mit reliefartigen Oberflächenstrukturen besonders wirkungsvoll. Vorzugsweise besteht der seitliche Wandabschnitt aus einem pigmentierten Grundmaterial. Auf derartige Wandabschnitte lässt sich besonders einfach drucken, insbesondere ohne die selektive bedruckte Fläche vorher mit einer Farbe zu unterdrucken. Unter einem pigmentierten Grundmaterial ist hierbei ein Material zu verstehen, das durch eine Farbe und/oder ein Pigment einen geeigneten Kontrast zum Aufdruck herstellt, so dass ein Unterdruck mit einer separaten Farbschicht entbehrlich wird. Beispielsweise könnte ein ansonsten farbiges oder auch farbloses Grundmaterial durch eine weiße Pigmentierung aufgehellt werden, um den selektiven Aufdruck zu vereinfachen. Generell ist aber auch ein heller Aufdruck auf einem vergleichsweise dunkleren Untergrund möglich. Ebenso lassen sich transparente und/oder farblose Wandabschnitte bedrucken, beispielsweise falls der Aufdruck an die Farbe des Füllguts angepasst werden soll.

Bei einer besonders günstigen Ausführungsform umfasst der Behälter ferner wenigstens einen kontrastierenden Wandabschnitt, der aus einem Grundmaterial mit einer von dem seitlichen Wandabschnitt abweichenden Farbe und/oder Graustufe und/oder Lichtdurchlässigkeit besteht. Durch derartige Kombination des kontrastierenden Wandabschnitts mit dem selektiven Aufdruck lässt sich ein besonders vorteilhafter optischer Effekt erzielen. Beispielsweise kann eine durch den kontrastierenden Wandabschnitt vorgegebene reliefartige und/oder ornamentale Struktur durch den selektiven Aufdruck fortgesetzt werden oder in einer komplementären Form oder Farbe ausgebildet werden, in Sinne eines Negativs.

Vorzugsweise ist der seitliche Wandabschnitt selektiv mit der Farbe und/oder Graustufe des Grundmaterials des kontrastierenden Wandabschnitts bedruckt. Dadurch lässt sich ein besonders vorteilhafter optischer Effekt erzielen. Ebenso lässt sich der Materialeinsatz beim Bedrucken reduzieren, indem beispielsweise der kontrastierende Wandabschnitt aufgrund der Farbübereinstimmung mit dem seitlichen Wandbereich nicht bedruckt zu werden braucht. Der kontrastierende Wandabschnitt kann jedoch ebenfalls bedruckt werden, um die Gestaltungsfreiheit weiter zu steigern.

Bei einer besonders günstigen Ausführungsform umfasst die reliefartige Oberflächenstruktur eine Markierung zur Füllstandsanzeige oder dergleichen. Dadurch lässt sich eine optische und/oder haptische Aufwertung mit einer verbesserten Handhabung beim Gebrauch des Behälters verbinden. Insbesondere durch einen selektiven Aufdruck lässt sich eine Markierung zur Füllstandsanzeige oder zur Restmengenanzeige des eingefüllten Produkts besonders wirkungsvoll mit der Farbe des Produkts kombinieren und/oder ein besonders guter Kontrast zum eingefüllten Produkt herstellen.

Vorzugsweise umfasst die reliefartige Oberflächenstruktur ein Schriftzeichen und/oder ein Symbol und/oder ein Logo. Dadurch können charakteristische Merkmale auf dem Behälter besonders wirkungsvoll hervorgehoben werden. Beispielsweise kann die Erkennbarkeit eines Schriftzeichens, die Signalwirkung eines Symbols und der Wiedererkennungswert eines Logos gezielt durch Kombination von Erscheinungsbild und Haptik verstärkt werden.

Bei einer besonders günstigen Ausführungsform des erfindungsgemäßen Behälters ist der selektive Aufdruck auf dem seitlichen Wandabschnitt ein Tintenstrahlaufdruck. Ein derartiger Aufdruck ist bezüglich der Farbgestaltung und der flexiblen Anpassung an unterschiedliche Behälter und Produkte besonders wünschenswert. Farbübergänge und eine Verstärkung von Glanzeffekten und/oder Schattenbildung lassen sich mit dem Tintenstrahldruck besonders gut nachbilden und/oder verstärken. Denkbar sind jedoch auch Druckverfahren nach dem Prinzip des Siebdrucks oder Tampondrucks.

Vorzugsweise umfasst der selektive Aufdruck individuell anpassbare Druckbereiche. Dadurch können besonders hochwertige Behälter erzeugt werden. Die individuell anpassbaren Bereiche können beispielsweise Bilder, Barcodes, Widmungen, Nachrichten und dergleichen enthalten. Somit können bestimmte Bereiche des Behälters besonders wirkungsvoll hervorgehoben und/oder besonders gut gelesen werden.

Die gestellte Aufgabe wird ferner gelöst mit einem Verfahren nach Anspruch 15 zum Bedrucken des erfindungsgemäßen Behälters, mit den Schritten:
a) Transformieren der reliefartigen Oberflächenkontur in eine zweidimensionale Projektion; und
b) Erstellen einer Druckanweisung zum selektiven Bedrucken der reliefartigen Oberflächenkontur auf Grundlage der zweidimensionalen Projektion.

Dies ermöglicht auch für reliefartige Oberflächenkonturen mit streng mathematisch nicht abwickelbaren Flächen eine Positionierung des Behälters und/oder einer Druckeinrichtung im dreidimensionalen Raum, um einen Aufdruck im Bereich der reliefartigen Oberflächenkontur gezielt und reproduzierbar anzubringen.

Vorzugsweise wird im Schritt a) wenigstens eine mathematisch nicht abwickelbare Fläche der reliefartigen Oberflächenkontur als zu bedruckende Fläche in der zweidimensionalen Projektion definiert. Dadurch können Druckanweisungen für herkömmliche Drucker zum Bedrucken ebener Flächen berechnet werden und geeignete Relativpositionen zwischen der reliefartigen Oberflächenkontur und dem Drucker während des Druckens angefahren werden. Vorzugsweise ist die zweidimensionale Projektion eine Zylinderprojektion oder eine Prismenprojektion, insbesondere eine Projektion auf Grundlage einer flächentreuen Zylinderprojektion, einer winkeltreuen Zylinderprojektion und/oder einer mittabstandstreuen Zylinderprojektion. Die Prismenprojektion projiziert die reliefartige Oberflächenkontur auf die Seitenflächen eines Prismas, wobei dessen Grundfläche gleichseitig oder ungleichseitig sein kann. Die flächentreue Zylinderprojektion ist beispielsweise eine Projektion nach Lambert. Die winkeltreue Zylinderprojektion ist beispielsweise eine Mercatorprojektion. Die mittabstanstreue Zylinderprojektion ist beispielsweise eine sogenannte quadratische Plattkarte. Es eignen sich aber auch andere Projektionen im Sinne von geographischen Kartennetzentwürfen und dergleichen sowie beliebige Kombinationen der genannten Projektionsmodelle.

Die zweidimensionale Projektion kann sich auf eine gedachte Bezugsfläche oder Grundfläche der reliefartigen Oberflächenkontur beziehen, die zwischen den erhabensten den tiefsten Reliefbereichen verläuft, beispielsweise im wesentlichen mittig zwischen den größten Erhebungen und Vertiefungen. Dadurch lässt sich ein hochwertiges Druckbild trotz Ungenauigkeiten und/oder Toleranzen bei der Projektion und dem Druck erzielen.

Eine besonders günstige Variante des erfindungsgemäßen Verfahrens umfasst ferner einen Schritt c) des Ausrichtens des seitlichen Wandabschnitts in eine Druckposition und ein Bedrucken der reliefartigen Oberflächenkontur, auf der Grundlage der Druckanweisung, insbesondere mittels Tintenstrahldruck. Dies ermöglicht einen besonders präzisen und reproduzierbaren Druck.

Vorzugsweise umfasst der Schritt des Ausrichtens ein Abtasten wenigstens eines Bereichs der reliefartigen Oberflächenkontur. Das Abtasten kann beispielsweise berührungslos mittels Lichtabtastung erfolgen. Dies verbessert die Zuordnung der zu bedruckenden Bereiche bezüglich des Druckmusters.

Vorteilhafte Ausführungsformen des erfindungsgemäßen Behälters sind in der Zeichnung dargestellt. Es zeigen:
- Fig. 1: eine Seitenansicht einer ersten Ausführungsform;
- Fig. 2: eine zweidimensionale Projektion der reliefartigen Oberflächenstruktur der ersten Ausführungsform;
- Fig. 3: eine Seitenansicht einer zweiten Ausführungsform; und
- Fig. 4: eine zweidimensionale Projektion der reliefartigen Oberflächenkontur der zweiten Ausführungsform.

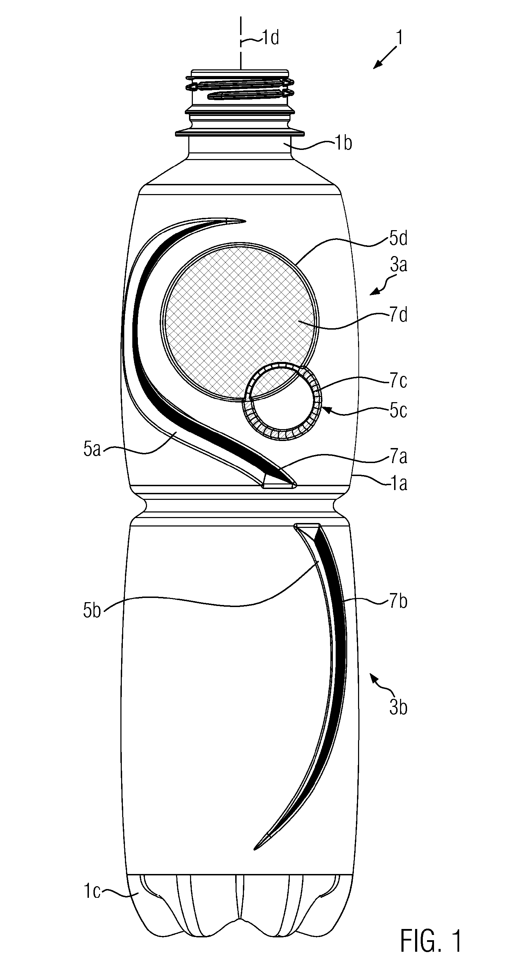

Wie die Fig. 1 erkennen lässt, umfasst die erste beispielhafte Ausführungsform 1 des erfindungsgemäßen Behälters, der beispielsweise aus PET oder HDPE im Streckblasverfahren hergestellt ist, in bekannter Weise eine Seitenwand 1a, einen Mündungsbereich 1 b und einen Bodenbereich 1 c. Im Bereich der Seitenwand 1a ist wenigstens ein seitlicher Wandabschnitt 3a, 3b vorgesehen, in dessen äußerer Oberfläche jeweils wenigstens eine reliefartige Oberflächenkontur 5a bis 5d ausgebildet ist. Der Behälter 1 könnte auch aus einem anderen Material bestehen, beispielsweise aus Glas.

Im Beispiel der Fig. 1 sind die reliefartigen Oberflächenkonturen 5a, 5b als Vertiefungen in den seitlichen Wandabschnitten 3a, 3b ausgebildet, die reliefartigen Oberflächenkonturen 5c, 5d dagegen als Erhebungen. Es sind jedoch beliebige Kombinationen erhabener und vertiefter Abschnitte in einer reliefartigen Oberflächenkontur 5a bis 5d denkbar. Ebenso ist der ornamentale Charakter der abgebildeten Oberflächenkonturen 5a bis 5d lediglich beispielhaft. Diese könnten ebenso Schriftzeichen, Symbole, Logos, Muster, für bestimmte Materialien oder Naturprodukte charakteristische Oberflächenstrukturen, wie beispielsweise Schlangenhaut, und dergleichen umfassen.

In den Bereichen der reliefartigen Oberflächenkonturen 5a bis 5d kann die Wandstärke der Behälterseitenwand 1a eine andere Dicke aufweisen als in den die Oberflächen konturen 5a bis 5d umgebenden Bereichen der seitlichen Wandbereiche 3a, 3b. Dies ist jedoch nicht zwingend erforderlich. Beispielsweise kann ein versteifender Effekt mit Hilfe der reliefartigen Oberflächenkonturen auch bei im Wesentlichen unveränderter Wanddicke im Bereich der reliefartigen Oberflächenkonturen 5a bis 5d erzielt werden, um beispielsweise radial einwirkenden Kräften, beispielsweise beim Greifen des Behälters 1 entgegen zu wirken.

Wie die Fig. 1 ferner anhand der geschwärzten oder schraffierten Bereiche erkennen lässt, sind die reliefartigen Oberflächenkonturen 5a bis 5c selektiv mit wenigstens einem Aufdruck 7a bis 7c versehen. Ferner ist innerhalb der reliefartigen Oberflächenkontur 5d ein Aufdruck 7d auf dem seitlichen Wandbereich 3a vorgesehen. Der Aufdruck folgt vorzugsweise, jedoch nicht zwingend, dem Verlauf der reliefartigen Oberflächenkonturen 5a bis 5c, um einen kontrastierenden Effekt gegenüber den jeweils umgebenden Bereichen der seitlichen Wandbereiche 3a, 3b zu verstärken. Beispielsweise können die Aufdrucke 7a bis 7c einen durch Schattenwurf, Reflexion und/oder durch das in den Behälter 1 einzufüllende Produkt verursachten Helligkeitskontrast und/oder Farbkontrast verstärken oder synergetisch ergänzen. Somit lässt sich eine plastische Wirkung der reliefartigen Oberflächenstrukturen 5a bis 5c durch den Aufdruck 7a bis 7c gezielt verstärken.

Es besteht generell auch die Möglichkeit, um die reliefartigen Oberflächenkonturen 5a bis 5d herum zu drucken, um diese hervorzuheben. Die Oberflächenkonturen 5a bis 5d selbst könnten dabei im Druckbild ausgespart bleiben. Beispielsweise könnte um die erhabene Oberflächenkontur 5d auch lediglich außen herum gedruckt werden. Ein Umdrucken wäre besonders wirkungsvoll bei reliefartigen, insbesondere erhabenen Oberflächenkonturen in Form von Markenschriftzügen, Logos und dergleichen, um den Wiedererkennungswert eines Produkts oder einer Marke durch den Behälter auf einfache und wirkungsvolle Weise zu verbessern.

Möglich ist außerdem ein günstiges Zusammenwirken des Erscheinungsbilds und der Haptik der reliefartigen Oberflächenkontur 5a bis 5d und/oder der an diese jeweils angrenzenden seitlichen Wandbereiche 3a, 3b, wie beispielsweise im Bereich der Oberflächenkontur 5d angedeutet ist. Somit kann generell ein Wert steigernder Effekt erzielt werden, beispielsweise durch Erzeugen einer Signalwirkung oder überraschender optischer Eindrücke, durch Vortäuschen als hochwertig empfundener Materialien und/oder Strukturen, durch Verbessern des Wiedererkennungswerts und dergleichen.

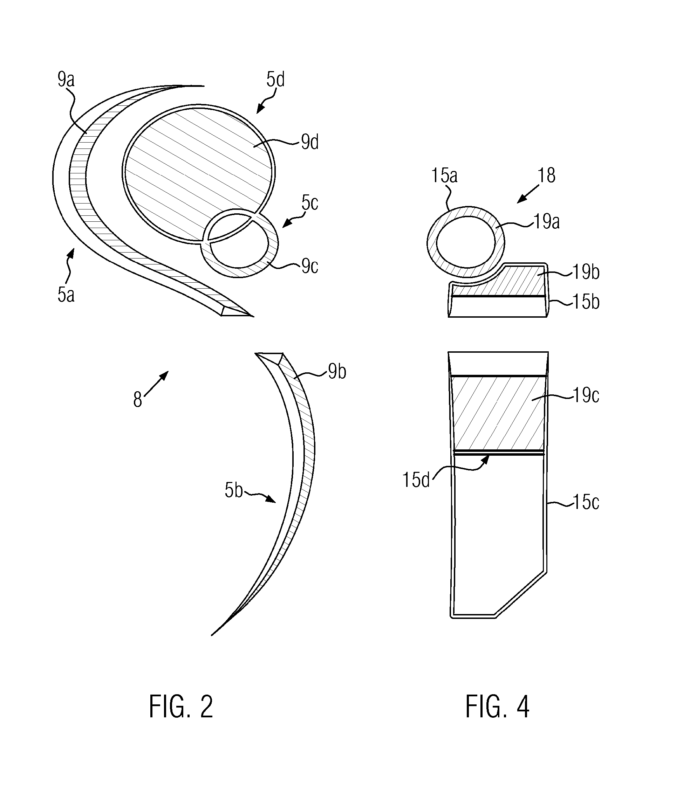

Die Fig. 2 zeigt die reliefartigen Oberflächenkonturen 5a bis 5d in einer zweidimensionalen Projektion 8, die im gezeigten Beispiel eine Zylinderprojektion um die Hochachse 1d des Behälters 1 ist. Im streng mathematischen Sinn zeichnet sich die erfindungsgemäße reliefartige Oberflächenkontur 5a bis 5d gerade dadurch aus, dass sie jeweils wenigstens eine nicht exakt abwickelbare Fläche umfassen. Dies kann ebenso für die seitlichen Wandbereiche 3a, 3b selbst gelten, also für an die reliefartige Oberflächenkonturen 5a bis 5d angrenzende Flächen, wie anhand der Krümmung der Behälterseitenwand 1a in der Fig. 1 deutlich wird.

Zum selektiven Bedrucken der seitlichen Wandbereiche 3a, 3b und insbesondere der reliefartigen Oberflächenkonturen 5a bis 5d werden diese daher vorzugsweise in die zweidimensionale Projektion 8 überführt. Geeignete Modelle für gekrümmte Behälterquerschnitte basieren beispielsweise auf bekannten Kartennetzentwürfen. Insbesondere eignen sich die flächentreue Zylinderprojektion, die winkeltreue Zylinderprojektion und die mittabstandstreue Zylinderprojektion, die sogenannte quadratische Plattkarte, bei der Kreisflächen auf der dreidimensionalen Oberfläche auch in der zweidimensionalen Projektion kreisförmig bleiben, sowie Abwandlungen und Kombinationen dieser Modelle. Je nach Form des Behälters 1 können aber auch andere zweidimensionale Projektionen 8 vorteilhaft sein, beispielsweise bei im Wesentlichen polygonalen Behälterquerschnitten eine Prismenprojektion auf die jeweiligen Seitenflächen eines die Behälterseitenwand umschließenden Prismas. Je nach Behälterform sind solche zweidimensionale Projektionen geeignet, die eine Umrechnung der Raumkoordinaten des Aufdrucks 7a bis 7d in ein zweidimensionales Druckbild oder Druckmuster 9a bis 9d erlauben, das beispielhaft durch die schraffierten Bereiche in der Fig. 2 angedeutet ist.

Näherungsweise kann die zweidimensionale Projektion 8 einer Abwicklung der Behälterseitenwand 1a entsprechen. Die Projektion 8 umfasst wenigstens ein Druckbild oder Druckmuster 9a bis 9d, um eine Druckanweisung für einen Drucker (nicht gezeigt) bereitzustellen. Entscheidend ist hierbei, dass eine Druckanweisung für das Bedrucken einer in zwei Dimensionen gekrümmten reliefartigen Oberflächenkontur 5a bis 5d erstellt werden kann. Realisieren lässt sich ein positionsgenaues Bedrucken der reliefartigen Oberflächenkonturen 5a bis 5d dann beispielsweise mit Hilfe einer entsprechenden Ausrichtung der Behälter 1 vor dem Bedrucken im dreidimensionalen Raum und dem anschließenden, der Druckanweisung entsprechenden Nachführen der Behälter 1 oder der Druckeinrichtung, die beispielsweise Tintenstrahldruckköpfe und dergleichen umfassen kann.

Geeignete technische Hilfsmittel zum Positionieren während des Druckens sind beispielsweise optische Sensoren, wie Laserabtaster, Kamerasysteme, mechanische Anschläge, wie beispielsweise in der Behälterwand integrierte Flächen, Vertiefungen oder Nuten, ein mechanisches Abtasten von Kanten der Behälteroberfläche und/oder das Erkennen von Kontrasten, Farbübergängen und dergleichen bei eingefärbten und/oder opaken Behältern 1.

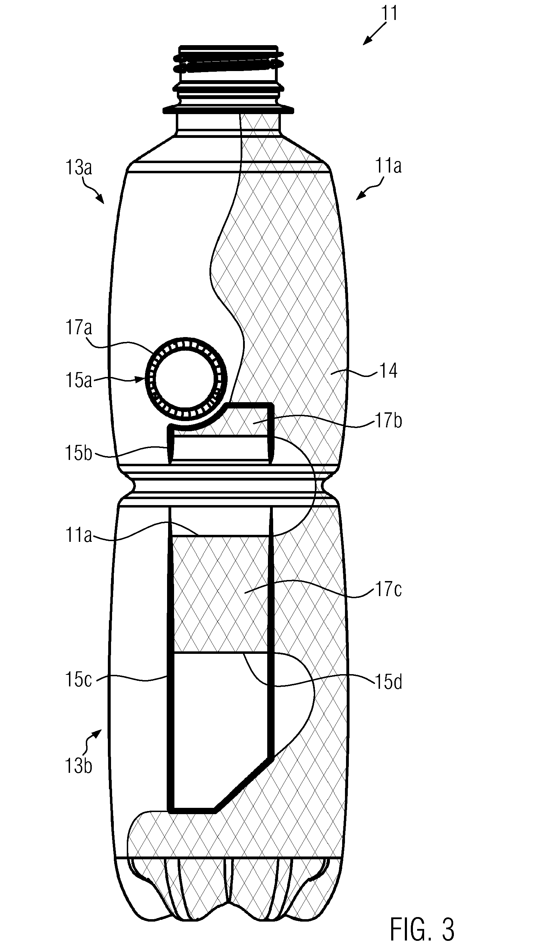

Besonders vorteilhaft ist die in der Fig. 3 beispielhaft dargestellte zweite Ausführungsform 11 des erfindungsgemäßen Behälters, bei der sich das Material der seitlichen Behälterwand 11a in wenigstens zwei von einander getrennten und bezüglich der Behälteroberfläche nebeneinander angeordneten Wandbereichen 13a, 13b, 14 hinsichtlich ihrer optischen Eigenschaften unterscheidet. Es sind, wie bei der ersten Ausführungsform 1, seitliche Wandbereiche 13a, 13b mit selektiv bedruckten reliefartigen Oberflächenkonturen 15a bis 15d vorgesehen und zusätzlich wenigstens ein kontrastierender Wandbereich 14, der sich hinsichtlich seiner Farbe und/oder Helligkeit und/oder Graustufe und/oder Lichtdurchlässigkeit von den seitlichen Wandbereichen 13a, 13b unterscheidet. In dem kontrastierenden Wandbereich 14 können ebenfalls reliefartige Oberflächenkonturen (nicht gezeigt) vorgesehen sein.

Im Beispiel ist die ringförmige Oberflächenkontur 15a erhaben, die übrigen Konturen 15b bis 15d sind als Vertiefungen ausgebildet. Auf den oder innerhalb der reliefartigen Oberflächenkonturen 15a bis 15d sind Aufdrucke 17a bis 17c selektiv vorgesehen. Das heißt, die reliefartigen Oberflächenkonturen 15a bis 15d können ganz oder teilweise bedruckt und/oder von dem Aufdruck 17a bis 17c umgeben sein. Hierbei kann der Aufdruck 17a bis 17c dem Verlauf der reliefartigen Oberflächenkontur 15a bis 15d folgen, diese schneiden, und/oder fortsetzen.

Der Aufdruck 17a bis 17c umfasst vorzugsweise einen Farbton und/oder eine Graustufe des kontrastierenden Wandbereichs 14. Somit kann eine durch den kontrastierenden Wandbereich 14 vorgegebene Form und/oder Farbgebung auf besonders einfache Weise im Bereich der reliefartigen Oberflächenkonturen 15a bis 15d fortgesetzt und/oder ergänzt werden, beispielsweise mittels spiegelbildlicher oder parallel verlaufender Formen und dergleichen. Dadurch lassen sich optisch und/oder haptisch attraktive und/oder funktionell den Wert steigernde dreidimensionale Oberflächenkonturen realisieren. Als Beispiel hierfür dient die reliefartige Oberflächenkontur 15d, die als Füllstandsanzeige oder Restmengenanzeige ausgebildet ist.

Durch das selektive Bedrucken der reliefartigen Oberflächenkonturen 15a bis 15d lassen sich somit gerade in Kombination mit wenigstens einem kontrastierenden Wandbereich 14 auf einfache Weise vielfältige optische, haptische und funktionelle Verbesserungen zur Wertsteigerung des Behälters 11 bei vergleichsweise geringem Herstellungsaufwand und Materialeinsatz realisieren. Es kann eine beliebige Anzahl kontrastierender Wandbereiche 14 vorgesehen sein, deren optische Eigenschaften, wie beispielsweise deren Farbe, sich je nach Bedarf unterscheiden können.

Die Anwendungsmöglichkeiten sind insbesondere nicht auf zweifarbige Behälterseitenwände 11a beschränkt. Unterschiedlich gefärbte Seitenwände 11a lassen sich auf einfache Weise durch Blasen aus bereichweise unterschiedlich gefärbten oder pigmentierten Vorformlingen (nicht gezeigt) herstellen. Hierbei können beliebige Bereiche der Vorformlinge aus unterschiedlichen Materialkomponenten bestehen, solange eine Herstellung der Behälter 11 im Streckblasverfahren möglich ist. Vor dem Blasen können mehrfarbige Vorformlinge beispielsweise durch Mikrowellenstrahlung unabhängig von der Farbgebung in geeigneter Weise konditioniert werden.

In der Fig. 4 sind die in der Fig. 3 gezeigten reliefartigen Oberflächenkonturen 15a bis 15d in einer zweidimensionalen Projektion 18 dargestellt, wie dies bereits für die erste Ausführungsform 1 beschrieben wurde. Anhand des schraffierten Druckbilds in Form der Druckbereiche 19a bis 19c lässt sich erkennen, dass der selektive Aufdruck 17a bis 17c im Bereich der reliefartigen Oberflächenkonturen 15a bis 15d nicht zwangsläufig deren Verlauf folgen muss.

Möglich wären auch andere selektive Aufdrucke 17a bis 17c, die quer, schräg oder teilweise überlappend bezüglich der reliefartigen Oberflächenkonturen 15a bis 15d verlaufen. Es können sowohl erhabene Bereiche als auch vertiefte Bereiche der reliefartigen Oberflächenkonturen 15a bis 15d bedruckt werden. Ebenso kann der Aufdruck 17a bis 17c in Bereichen, die erhabene und/oder vertiefte Strukturen umgeben, vorgesehen sein. Für den Aufdruck eignen sich in besonderer Weise der Digitaldruck mittels Farbstrahl, aber auch der Siebdruck oder der Tampondruck. Besonders geeignet für den Aufdruck komplexer Muster und Farbverläufe sind Farben, die sich mit Hilfe des Tintenstrahlverfahrens aufbringen lassen.

Das Streckblasverfahren eignet sich in besonderer Weise zur Herstellung von Behältern 1, 11, wie beispielsweise Getränkeflaschen oder Behälter für Kosmetikartikel, Reinigungsmittel und dergleichen, mit reliefartigen Oberflächenkonturen 5a bis 5d, 15a bis 15d, insbesondere auch unter Verwendung von Mehrkomponenten-Vorformlingen, um die Behälter 11 mit Wandbereichen unterschiedlicher Färbung und/oder Graustufen bereitzustellen. Generell ließen sich erfindungsgemäße Kunststoffbehälter auch durch Spritzguss und dergleichen herstellen. Außerdem können die erfindungsgemäßen Behälter 1, 11 aus anderen Kunststoffen als PET und HDPE oder aus Glas hergestellt werden.

Die beschriebenen Ausführungsformen können beliebig in technisch sinnvoller Weise miteinander kombiniert werden, um den Wert von Behältern durch die Kombination von Aufdrucken und reliefartigen Oberflächenkonturen zu steigern und/oder ihre Funktionalität zu verbessern.

## Patentansprüche

1. Behälter (1, 11) zur Verpackung, insbesondere Verkaufsverpackung von Produkten, insbesondere Getränken, wobei der Behälter wenigstens einen seitlichen Wandabschnitt (3a, 3b, 13a, 13b) umfasst, in dem eine reliefartige Oberflächenkontur (5a - 5d, 15a - 15d) zur Verzierung und/oder Markierung ausgebildet ist;
**dadurch gekennzeichnet, dass**
die reliefartige Oberflächenkontur und/oder der seitliche Wandabschnitt um die reliefartige Oberflächenkontur herum selektiv bedruckt ist.

2. Behälter nach Anspruch 1, wobei ein Aufdruck (7a - 7d, 17a - 17c) mit einem dem Verlauf der reliefartigen Oberflächenkontur (5a - 5d, 15a - 15d) folgenden Helligkeitskontrast und/oder Farbkontrast vorgesehen ist.

3. Behälter nach Anspruch 1 oder 2, wobei die reliefartige Oberflächenkontur (5a - 5d, 15a-15d) wenigstens eine Erhebung und/oder Vertiefung aufweist, die in einer zweidimensionalen Projektion (8) des seitlichen Wandabschnitts (3a, 3b, 13a, 13b), insbesondere in einer Zylinderprojektion um die Hochachse (1d) des Behälters (1), gekrümmt und/oder schräg verläuft.

4. Behälter nach wenigstens einem der vorigen Ansprüche, wobei die reliefartige Oberflächenkontur (5a - 5d, 15a - 15d) ferner zur Versteifung des Behälters (1), insbesondere zur radialen und/oder axialen Versteifung, ausgebildet ist.

5. Behälter nach wenigstens einem der vorigen Ansprüche, wobei der Behälter (1) aus Kunststoff, insbesondere aus PET oder HDPE besteht.

6. Behälter nach wenigstens einem der vorigen Ansprüche, wobei der Behälter (1) ein im Streckblasverfahren hergestellter Behälter ist.

7. Behälter nach Anspruch 6, wobei der Behälter aus einem Vorformling umfassend wenigstens zwei unterschiedlich eingefärbte Wandabschnitte geblasen ist.

8. Behälter nach Anspruch 7, wobei sich ein Druckbild (19a - 19c) im Farbton eines der unterschiedlich eingefärbten Wandabschnitte (14) übergangslos in wenigstens dem zweiten Wandabschnitt (13a, 13b) fortsetzt.

9. Behälter nach wenigstens einem der vorigen Ansprüche, wobei der seitliche Wandabschnitt (3a, 3b, 13a, 13b) aus einem pigmentierten Grundmaterial besteht.

10. Behälter nach wenigstens einem der vorigen Ansprüche, ferner mit wenigstens einem kontrastierenden Wandabschnitt (14), der aus einem Grundmaterial mit einer von dem seitlichen Wandabschnitt (13a, 13b) abweichenden Farbe und/oder Graustufe und/oder Lichtdurchlässigkeit besteht.

11. Behälter, nach Anspruch 10, wobei der seitliche Wandabschnitt (13a, 13b) selektiv mit der Farbe und/oder Graustufe des Grundmaterials des kontrastierenden Wandabschnitts (14) bedruckt ist.

12. Behälter, nach wenigstens einem der vorigen Ansprüche, wobei die reliefartige Oberflächenstruktur (15d) eine Markierung zur Füllstandsanzeige oder dergleichen umfasst und/oder wenigstens ein Schriftzeichen und/oder wenigstens ein Symbol und/oder wenigstens ein Logo.

13. Behälter nach wenigstens einem der vorigen Ansprüche, wobei der selektive Aufdruck (7a - 7d, 17a - 17c) ein Tintenstrahlaufdruck ist.

14. Behälter nach wenigstens einem der vorigen Ansprüche, wobei der selektive Aufdruck (7a - 7d, 17a - 17c) individuell anpassbare Druckbereiche umfasst.

15. Verfahren zum Bedrucken eines Behälters (1, 11) nach wenigstens einem der vorigen Ansprüche, mit den Schritten:
a) Transformieren der reliefartigen Oberflächenkontur (5a - 5d, 15a - 15d) in eine zweidimensionale Projektion (8, 18); und
b) Erstellen einer Druckanweisung zum selektiven Bedrucken der reliefartigen Oberflächenkontur auf Grundlage der zweidimensionalen Projektion.

16. Verfahren nach Anspruch 15, wobei im Schritt a) wenigstens eine mathematisch nicht abwickelbare Fläche der reliefartigen Oberflächenkontur (5a - 5d, 15a - 15d) als zu bedruckende Fläche (9a - 9d, 19a - 19c) in der zweidimensionalen Projektion (8, 18) definiert wird.

17. Verfahren nach Anspruch 15 oder 16, wobei die zweidimensionale Projektion (8, 18) eine Zylinderprojektion oder eine Prismenprojektion ist, insbesondere eine Projektion auf Grundlage einer flächentreuen Zylinderprojektion, einer winkeltreuen Zylinderprojektion und/oder einer mittabstandstreuen Zylinderprojektion.

18. Verfahren nach wenigstens einem der Ansprüche 15 bis 17, ferner mit einem Schritt c) des Ausrichtens des seitlichen Wandabschnitts (3a, 3b, 13a, 13b) in eine Druckposition und Bedrucken der reliefartigen Oberflächenkontur (5a - 5d, 15a - 15d), auf der Grundlage der Druckanweisung, insbesondere mittels Tintenstrahldruck.

19. Verfahren nach Anspruch 18, wobei der Schritt des Ausrichtens ein Abtasten wenigstens eines Bereichs der reliefartigen Oberflächenkontur (5a - 5d, 15a - 15d) umfasst.
